# EUROPÄISCHE PATENTSCHRIFT

(11) **EP 3 691 930 B1**
(45) Veröffentlichungstag und Bekanntmachung des Hinweises auf die Patenterteilung: **20.04.2022**
(21) Anmeldenummer: 18785500.2
(22) Anmeldetag: 19.09.2018
(51) Int. Cl.: B60L 53/30, B60L 53/16

(54) **ELEKTRISCHE ANSCHLUSSVORRICHTUNG FÜR ELEKTRO- ODER HYBRIDKRAFTFAHRZEUGE**
ELECTRIC CONNECTION DEVICE FOR ELECTRIC OR HYBRID MOTOR VEHICLES
DISPOSITIF DE CONNEXION ÉLECTRIQUE POUR VÉHICULES À MOTEUR ÉLECTRIQUES OU HYBRIDES

(30) Priorität: 06.10.2017 DE 102017123208
(43) Veröffentlichungstag der Anmeldung: 12.08.2020
(73) Patentinhaber: Kiekert AG, 42579 Heiligenhaus (DE)
(72) Erfinder: DJEDOVIC, Benjamin, 46049 Oberhausen (DE); SONNENSCHEIN, Tim, 42329 Wuppertal (DE); SCHLABS, Winfried, 44869 Bochum (DE); TÖPFER, Claus, 71063 Sindelfingen (DE)
(86) Internationale Anmeldenummer: PCT/DE2018/100795
(87) Internationale Veröffentlichungsnummer: WO 2019/068280

(56) Entgegenhaltungen:
- EP-A2- 3 203 592
- DE-A1- 19 544 942
- DE-A1-102010 029 446
- US-A1- 2013 137 286

## Beschreibung

Die Erfindung betrifft eine elektrische Anschlussvorrichtung für Elektro- oder Hybridkraftfahrzeuge, mit einer Ladesteckdose und einem Ladestecker, wobei der Ladestecker in der Ladesteckdose mit Hilfe eines verfahrbaren Riegelelementes lösbar verankert ist, und wobei ein Antrieb mit mehrstufigem Getriebe zur Beaufschlagung des Riegelelementes vorgesehen ist.

Akkumulatoren von Elektro- oder Hybridkraftfahrzeugen müssen regelmäßig mit elektrischer Energie versorgt werden. Das geschieht unter Rückgriff auf eine Ladeinfrastruktur, zu welcher typischerweise Ladesäulen gehören. Für den Ladevorgang mit elektrischer Energie wird der Ladestecker im Allgemeinen mit einer kraftfahrzeugseitigen Ladesteckdose gekoppelt und lösbar verriegelt. Die Verriegelung ist erforderlich, um Gesundheitsgefährdungen zu vermeiden, da an dieser Stelle im Allgemeinen mit Hochspannung gearbeitet wird.

Darüber hinaus stellt die Verriegelung sicher, dass beispielsweise ein zuvor identifizierter Benutzer die von der Ladesäule zur Verfügung gestellte elektrische Energie auch rechtmäßig bezieht und Missbrauch verhindert wird. Bei bekannten Lösungen, wie sie in der WO 2010/149426 A1 in diesem Zusammenhang beschrieben werden, erfolgt eine Kommunikation mit Hilfe eines Identifikationssignals, um die Berechtigung des Benutzers nachzuweisen und sicherzustellen, dass der Benutzer die entnommene elektrische Energie auch bezahlt.

Für den Antrieb des Riegelelementes werden im Stand der Technik unterschiedliche Lösungen beschrieben. So ist es durch die DE 10 2014 2017 696 A1 bekannt geworden, hierfür eine Druckfeder für das Riegelelement vorzusehen, mit deren Hilfe das Riegelelement vorgespannt ist.

Die gattungsbildende Lösung nach der CN 2020695855 U greift in diesem Zusammenhang auf einen elektromotorischen Antrieb für das Riegelelement zurück. Der elektromotorische Antrieb setzt sich aus einem Elektromotor und einem nachgeschalteten mehrstufigen Getriebe zusammen. Das mehrstufige Getriebe arbeitet über einen Nocken auf das Riegelelement.

Bei der bekannten Lehre wird zu diesem Zweck eine Drehbewegung der Abtriebswelle des Elektromotors auf das Getriebe umgelenkt, um die beschriebene Beaufschlagung des Riegelelementes mit Hilfe des Nockens zu realisieren. Das ist in kinematischer Hinsicht insofern ungünstig, als bei beispielsweise einer Kraftbeaufschlagung des in der Ladesteckdose lösbar verriegelten Ladesteckers hohe Querkräfte auf das Riegelelement einwirken können. Insofern werden an dieser Stelle zunehmend kompakte Antriebe gefordert, die zugleich ein hohes ausgangsseitiges Drehmoment zur Beaufschlagung des Riegelelementes zur Verfügung stellen. Dazu sind die bisherigen Lösungen nicht in der Lage.

Der Erfindung liegt das technische Problem zugrunde, eine derartige elektrische Anschlussvorrichtung so weiter zu entwickeln, dass auch hohe am Ladestecker angreifende und auf das Riegelelement einwirkende Kräfte aufgefangen werden, und zwar unter Berücksichtigung eines zugleich kompakten Aufbaues des Antriebes.

Bei einer gattungsgemäße elektrische Anschlussvorrichtung für insbesondere Elektro- oder Hybridkraftfahrzeuge weist das mehrstufige Getriebe einzelne Wellen auf, die jeweils parallel zur Abtriebswelle eines Elektromotors des Antriebes angeordnet sind. Dabei ist eine abtriebsseitige Welle vorgesehen ist, die mit wenigstens zwei Eingriffen unterschiedlicher Verzahnung ausgerüstet ist, wobei ein zweiter Eingriff der abtriebsseitigen Welle zur Kopplung mit einer Notentriegelung eingerichtet ist. Erfindungsgemäß weist die Notentriegelung eine manuell betätigbare Kurbel an einer separaten Welle auf.

Tatsächlich verfügt der Antrieb bzw. elektromotorische Antrieb nicht nur über den Elektromotor, sondern auch über ein ausgangsseitig von diesem beaufschlagtes mehrstufiges Getriebe. Dabei kann das Getriebe insgesamt dreistufig ausgebildet sein und hat sich in diesem Zusammenhang eine solche Auslegung als besonders günstig erwiesen.

Außerdem ist die Auslegung weiter vorteilhaft so getroffen, dass die Abtriebswelle des Elektromotors des Antriebs als erste Welle und eine weitere zweite Welle größtenteils in seitlicher Überdeckung zueinander angeordnet sind. Dadurch gibt praktisch die kombinierte Länge des Elektromotors inklusive Abtriebswelle eine Längsausdehnung eines zugehörigen Antriebsgehäuses zur Aufnahme des gesamten elektromotorischen Antriebs vor. Weiter wird meistens so vorgegangen, dass zusätzlich eine dritte Welle vorgesehen ist, folglich das mehrstufige Getriebe vorteilhaft dreistufig ausgebildet ist. Dabei ist die Auslegung ferner so getroffen, dass die fragliche dritte Welle in seitlicher Überdeckung zur zweiten Welle und dem Elektromotor verläuft. Auf diese Weise gibt unverändert die kombinierte Länge des Elektromotors inklusive seiner Abtriebswelle die Längserstreckung des Antriebsgehäuses vor. Seine Quererstreckung bemisst sich anhand der parallelen Lage der Abtriebswelle des Elektromotors, der zweiten und dritten Welle jeweils zueinander. Jedenfalls werden auf diese Weise eine insgesamt kompakte Auslegung des Antriebes und ein kleinbauendes Antriebsgehäuse zur Verfügung gestellt.

Erfindungsgemäß ist das mehrstufige Getriebe mit einer abtriebseitigen Welle ausgerüstet ist, die über wenigstens zwei Eingriffe unterschiedlicher Verzahnung verfügt. Für den Fall, dass das mehrstufige Getriebe vorteilhaft dreistufig ausgelegt ist, fällt die abtriebsseitige Welle mit der dritten Welle zusammen. Wie zuvor bereits beschrieben, verläuft die dritte Welle vorteilhafterweise in seitlicher Überdeckung zur zweiten Welle und dem Elektromotor.

Die besagte dritte Welle ist nun mit den wenigstens zwei Eingriffen unterschiedlicher Verzahnung ausgerüstet. Ein erster Eingriff der abtriebseitigen Welle dient zur Kopplung mit einer eingangsseitigen Welle. Vorliegend handelt es sich hierbei meistens um die zweite Welle. Der zweite Eingriff an der abtriebseitigen Welle dient erfindungsgemäß zur Kopplung mit einer Notentriegelung.

Erfindungsgemäß verfügt die Notentriegelung im Allgemeinen über eine manuell betätigbare Kurbel. Die Kurbel ist an einer separaten Welle vorgesehen. Die separate Welle der Notentriegelung ist im Allgemeinen in seitlicher Überdeckung mit dem Elektromotor und in angenäherter Verlängerung der zweiten Welle im Innern des Antriebsgehäuses angeordnet.

Die abtriebsseitige bzw. dritte Welle kann schließlich noch mit einem Exzenter ausgerüstet sein. Der Exzenter wechselwirkt im Allgemeinen mit dem Riegelelement als drittem Eingriff. Dabei ist weiter und im Detail die Auslegung so getroffen, dass die Eingriffe zwischen den einzelnen Wellen als beispielsweise Stirnverzahnung und/oder Schrägverzahnung und/oder Evoloid-Verzahnung ausgeführt sind. Selbstverständlich sind auch Kombinationen möglich.

Eine Evoloid-Verzahnung ist in diesem Zusammenhang mit dem Vorteil verbunden, dass sich hierdurch besonders hohe Übersetzungen realisieren lassen. Das ist insofern von Bedeutung, als auf diese Weise ausgangsseitig des Elektromotors und folglich des elektromotorischen Antriebes die gewünschten hohen Drehmomente zur Beaufschlagung des Riegelelementes zur Verfügung stehen.

Im Übrigen lassen sich mit Hilfe einer solchen Evoloid-Verzahnung besonders wenig Getriebegeräusche erzeugen und wird ein hoher Wirkungsgrad beobachtet. Schließlich lassen sich unter Rückgriff auf solche Evoloid-Verzahnungen besonders kompakte Getriebekonstruktionen realisieren, was von besonderer Bedeutung im Rahmen der vorliegenden Erfindung ist. Hierin sind die wesentlichen Vorteile zu sehen.

Im Folgenden wird die Erfindung anhand von Zeichnungen, welche ein bevorzugtes Ausführungsbeispiel darstellen, näher erläutert. Es zeigen:
- Fig. 1: die erfindungsgemäße elektrische Anschlussvorrichtung in einer Übersicht,
- Fig. 2A bis 2C: die Kontaktierung zwischen Ladesteckdose und Ladestecker in einzelnen Funktionszuständen im Schnitt und
- Fig. 3: eine Aufsicht auf das Antriebsgehäuse in geöffnetem Zustand.

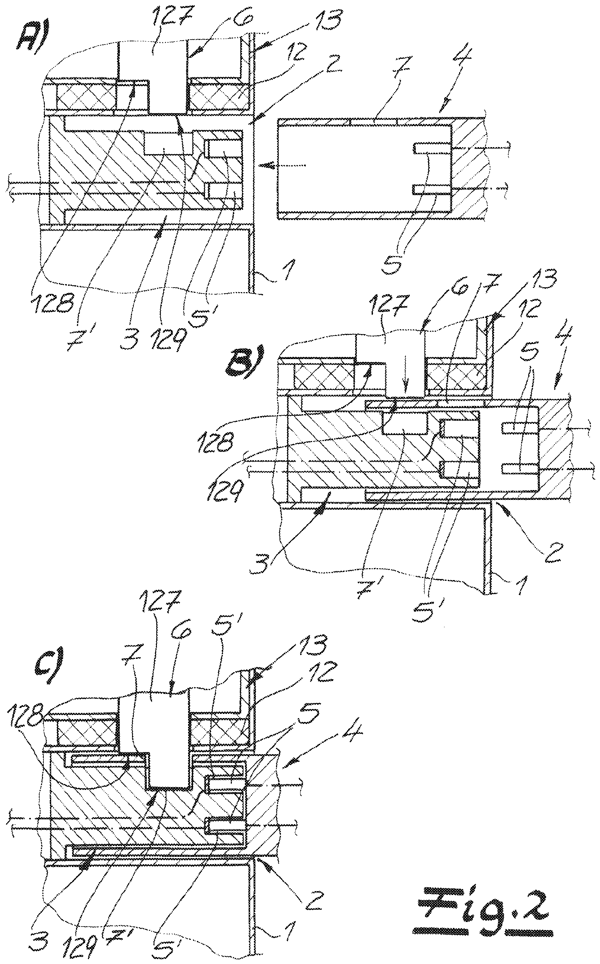

In den Figuren ist eine elektrische Anschlussvorrichtung für Elektro- oder Hybridkraftfahrzeuge dargestellt. In der Übersichtszeichnung nach den Fig. 2A bis 2C ist von dem fraglichen Elektro- oder Hybridkraftfahrzeug ansatzweise eine Karosserie 1 dargestellt. Die Karosserie 1 ist mit einer Ausnehmung 2 ausgerüstet. In der Ausnehmung 2 findet sich eine Ladesteckdose 3. Die Ladesteckdose 3 kann elektrisch und lösbar verriegelnd mit einem Ladestecker 4 gekoppelt werden, welcher dazu in die Ausnehmung 2 in der Karosserie 1 eingeführt und elektrisch verbindend mit der Ladesteckdose 3 gekoppelt wird.

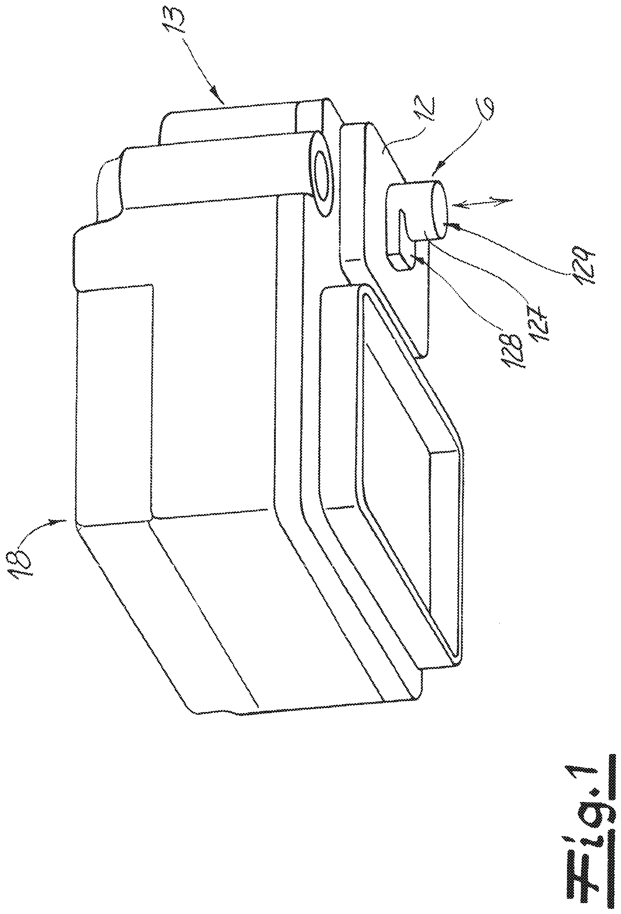

Zu diesem Zweck verfügt der Ladestecker 4 über in der Fig. 1 lediglich angedeutete Steckkontakte 5, die in zugehörige Steckbuchsen 5' im Innern der Ladesteckdose 3 eingreifen. Selbstverständlich kann auch umgekehrt vorgegangen werden. In diesem Fall ist die Ladesteckdose 3 mit den Steckkontakten 5 ausgerüstet, die in zugehörige Steckbuchsen 5' des Ladesteckers 4 lösbar eingreifen, was jedoch nicht dargestellt ist.

Um den Ladestecker 4 mit der Ladesteckdose 3 lösbar zu verriegeln, ist ein verfahrbares Riegelelement 6 vorgesehen. Bei dem verfahrbaren Riegelelement 6 handelt es sich im Ausführungsbeispiel um einen Verriegelungsstift oder Verriegelungsstößel, folglich ein insgesamt zylindrisches Riegelelement 6, welcher aus Kunststoff gefertigt ist. In alternativen Ausführungen kann das Riegelelement 6 auch aus einem Metall gefertigt sein. Das Riegelelement 6 greift zur lösbaren Verriegelung des Ladesteckers 4 gegenüber der Ladesteckdose 3 in eine zugehörige Ausnehmung 7 im Ladestecker 4 ein. Außerdem greift das Riegelelement 6 zusätzlich noch in verriegeltem Zustand nach der Fig. 2C in eine weitere Ausnehmung 7' in der Ladesteckdose 3 ein.

Das Riegelelement 6 lässt sich gegenüber den beiden Ausnehmungen 7, 7' verfahren, um die Verriegelung zwischen dem Ladestecker 4 und der Ladesteckdose 3 herzustellen respektive aufzuheben. Der entriegelte Zustand korrespondiert zur Darstellung nach der Fig. 2A. Die Fig. 2B zeigt dagegen den Vorgang des Verriegelns, wohingegen die Fig. 2C schließlich den verriegelten Zustand wiedergibt. Hierzu korrespondieren jeweils Bewegungen des Riegelelementes 6 in seiner Längsrichtung, wie dies durch einen Doppelpfeil in der Fig. 1 angedeutet ist. Für die Stellbewegungen des Riegelelementes 6 sorgt nach dem Ausführungsbeispiel ein elektromotorischer Antrieb. Die Längsrichtung des Riegelelements 6 verläuft senkrecht zu einer Ebene, in der Wellen 9, 10, 11 des Antriebs angeordnet sind.

Der Antrieb umfasst einen Elektromotor 8, eine erste Welle 9, eine zweite Welle 10, eine dritte Welle 11 und einen Verriegelungshebel 119 an dem das Riegelelement 6 anliegt. Der Verriegelungshebel 119 wird über den Elektromotor 8 und die Wellen 9-11 in Bewegung versetzt, wodurch das Riegelelement 6 verfahren wird. Der Verriegelungshebel 19 wird dabei senkrecht zu einer Ebene, in der die Wellen 9-11 angeordnet sind, verfahren. Im Ausführungsbeispiel sind der Verriegelungshebel 119 und das Riegelelement 6 einstückig miteinander ausgeführt.

Das Riegelelement 6 weist eine gestufte Gestaltung mit einem Vorsprung 127 auf, so dass das Riegelelement 6 eine erste, höher gelegene Auflagefläche 129 auf dem Vorsprung 127 und eine zweite, niedriger gelegene, Auflagefläche 128 aufweist. Die relativen Angaben "höher gelegen" und "niedriger gelegen" beziehen sich hierbei auf einen Abstand zu einem gehäuseseitigen Ende des Riegelelements 6. Mit Hilfe der zwei Auflageflächen 128, 129 kann erfasst werden, ob der Ladestecker 4 ausreichend tief in die Ladesteckdose 3 eingeführt worden ist. Hierbei wird ausgenutzt, dass das Riegelelement 6 im Normalbetrieb, d.h. bei ausreichend tiefer Einführung des Ladesteckers 4 in die Ladesteckdose 3, sowohl die Ausnehmung 7 des Ladesteckers 4 durchgreift als auch in die Ausnehmung 7' der Ladesteckdose eingreift, um zu verriegeln. Die Ausnehmungen 7, 7' sind dabei in Bezug auf ihre Größe und Ausrichtung zueinander so gewählt, das im Normalbetrieb das Riegelelement 6 durch die Ausnehmung 7 in dem Ladestecker 4 durchgeführt wird und mit dem Vorsprung 127 in die Ausnehmung 7' der Ladesteckdose 3 eingeführt wird, wogegen die zweite Auflagefläche 128 an einer Oberfläche des Ladesteckers 3 zu liegen kommt und die Bewegung des Riegelelements 6 dadurch abgestoppt wird. Zusätzlich wird überwacht, wie lange der Elektromotor 8 des Antriebs vor der Abstoppung des Riegelelements 6 betrieben wurde, beispielsweise über eine Überwachung einer Anzahl von Drehungen einer der Wellen 9-10 oder über einen Stromverbrauch des Elektromotors 8. Dadurch kann festgestellt werden, ob der Normalbetrieb vorliegt. Ist der Ladestecker 3 nicht ausreichend tief eingeführt, kommt bereits die erste Auflagefläche 129 an dem Vorsprung 127 auf dem Ladestecker 3 zu liegen und das Riegelelement 6 wird bereits vorher abgestoppt. Zusätzlich kann eine dritte Situation erkannt werden, nämlich wenn der Ladestecker 3 gebrochen ist und somit eine sichere Verriegelung auch bei ausreichend tiefer Einführung nicht gewährleistet ist. In diesem Fall lässt sich das Riegelelement 6 tiefer als im Normalbetrieb einführen.

Die erste Welle 9 des elektromotorischen Antriebs bildet eine Abtriebswelle des Elektromotors 8 und kämmt über eine Verzahnung 122, welche bevorzugt als Evoloid-Verzahnung ausgeführt ist, mit der zweiten Welle 10. Die zweite Welle 10 weist ebenfalls eine Verzahnung 123 auf, über die die zweite Welle 10 mit der dritten Welle 11 kämmt. Auch die Verzahnung 123 der zweiten Welle 10 kann als Evoloid-Verzahnung ausgeführt sein. Die Evoloid-Verzahnung stellt eine hohe bis sehr hohe Übersetzung von beispielsweise 1:30, 1:80, 1:140 oder 1:320 bei relativ kompaktem Raumbedarf zur Verfügung.

Die dritte Welle 11 weist neben einer ersten Verzahnung 124, die mit der Verzahnung 123 der zweiten Welle kämmt, eine zweite Verzahnung 125 auf, die an einem der ersten Verzahnung 124 gegenüberliegenden Ende der dritten Welle 11 angeordnet ist. Die zweite Verzahnung 125 dient zum Antrieb einer Schalterbetätigung 130, über die ein als Mikroschalter ausgeführter Sensor 16 betätigt wird. Mittels der Betätigung des Mikroschalters wird eine erfolgte Drehung der dritten Welle 11 erfasst. Der Mikroschalter erfasst hierüber, wie weit sich die dritte Welle 11 gedreht hat bzw. wie lange der Antrieb in Betrieb gewesen ist.

Der elektromotorische Antrieb wird in einem eigenen Antriebsgehäuse 13 aufgenommen und von dem Antriebsgehäuse 13 insgesamt eingehaust, so dass der Antrieb modular und unabhängig von der Ladesteckdose 3 im Innern der Karosserie 1 an geeigneter Stelle platziert und eingebaut werden kann. Eine am Antriebsgehäuse 13 außenseitig vorgesehene Dichtung 12 im Bereich des Riegelelementes 6 sorgt dafür, dass das Riegelelement 6 abgedichtet gegenüber dem Antriebsgehäuse 13 hin- und herbewegt werden kann. Da darüber hinaus das Riegelelement 6 im Antriebsgehäuse 13 gelagert ist, steht insgesamt eine einbaufertige Baugruppe bzw. ein Einbaumodul zur Verfügung. Selbstverständlich fallen unter die Erfindung auch Lösungen, bei welchen der Antrieb und die Ladesteckdose 3 in einem gemeinsamen Gehäuse aufgenommen werden, was jedoch nicht gezeigt ist.

Mit Hilfe des Antriebes vollführt das Riegelelement 6 Stellbewegungen gegenüber einer Führung 14, 15. Die Führung 14, 15 ist nach dem Ausführungsbeispiel zweiteilig ausgebildet und setzt sich im Wesentlichen aus einer ortsfesten Gehäuseführung 14 im Antriebsgehäuse 13 einerseits und einer bewegbaren Abstützung 15 andererseits als jeweils Führungsbestandteile 14, 15 zusammen.

Man erkennt, dass das Getriebe des Antriebes insgesamt mehrstufig und drei Getriebestufen aufweist. Erfindungsgemäß sind die zugehörigen Wellen 9, 10, 11 nach dem Ausführungsbespiel jeweils parallel zur Abtriebswelle 9 des Elektromotors 8 des Antriebes angeordnet. Außerdem sind die Wellen 9, 10, 11 und zugehörige Zahnräder insgesamt und nicht einschränkend aus Kunststoff hergestellt. Gleiches gilt für das Antriebsgehäuse 13.

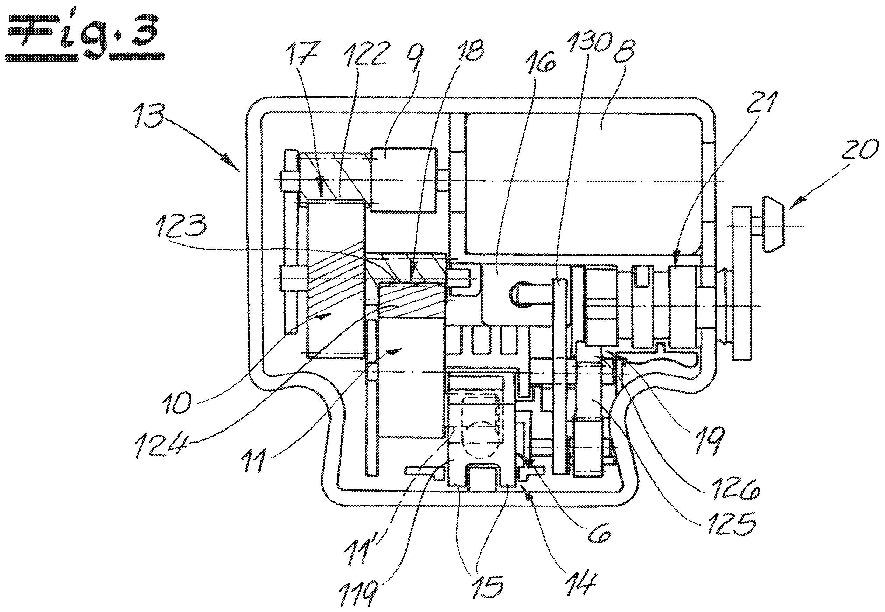

Tatsächlich ist die Auslegung ausweislich der Fig. 3 so getroffen, dass die Abtriebswelle des Elektromotors 8 des Antriebes als erste Welle 9 und die zweite Welle 10 größtenteils in seitlicher Überdeckung zueinander angeordnet sind. Die zweite Welle 10 verfügt über eine vergleichbare Längserstreckung wie die erste Welle 9 und beide Wellen 9, 10 überdecken sich größtenteils seitlich, so dass im Endeffekt kein seitlicher Überstand vorhanden ist. Darüber hinaus ist die dritte Welle 11 in seitlicher Überdeckung zur zweiten Welle 10 und zum Elektromotor 8 verlaufend innerhalb des Antriebsgehäuses 13 angeordnet. Selbstverständlich ist die dritte Welle 11 ebenfalls parallel zur zweiten Welle 10 und diese wiederum zu ersten Welle 9 angeordnet.

Durch diese spezielle Ausprägung mit den parallel verlaufenden Wellen 9, 10, 11 und ihre seitliche Überdeckung kann das Antriebsgehäuse 13 insgesamt besonders kompakt gestaltet werden und steht ein klein bauender Antrieb zur Verfügung. Denn die addierte Länge des Elektromotors 8 inklusive erster Welle 9 gibt die Längserstreckung des Antriebsgehäuses 13 vor. Aus der seitlichen Anordnung mit Überdeckung der zweiten und dritten Welle 10, 11 resultiert dann im Wesentlichen die Quererstreckung des Antriebsgehäuses 13. Hierbei ist zusätzlich noch ein Exzenter 11' in Gestalt einer Abkröpfung der dritten bzw. abtriebsseitigen Welle 11 zu berücksichtigen.

Infolge des kompakten Aufbaues des Antriebsgehäuses 13 findet darüber hinaus im Innern ein Sensor 16 Platz, mit dessen Hilfe anhand der Position des Getriebes die Stellung des Riegelelementes 6 abgefragt und an eine entfernte Steuereinheit übermittelt werden kann. Der Sensor 16 ist als Mikroschalter ausgeführt, der über die Schalterbetätigung 130 betätigt wird. Mit Hilfe des Exzenters bzw. der Abkröpfung 11' wird das Riegelelement 6 in seiner Längsrichtung mit Hilfe des Antriebes 8 bis 11 beaufschlagt, wie dies zuvor bereits beschrieben wurde.

Die abtriebsseitige bzw. dritte Welle 11 verfügt über wenigstens zwei Eingriffe 18, 19. Zusätzlich ist noch ein weiterer Eingriff 17 zwischen der ersten Welle 9 und der zweiten Welle 10 vorgesehen und realisiert. Bei dem Eingriff 19 handelt es sich im Ausführungsbeispiel um einen Nocken bzw. zwei miteinander wechselwirkende Nocken.

Der eingangsseitige Eingriff 17 ist im Ausführungsbeispiel und nicht einschränkend als an der Abtriebswelle bzw. ersten Welle 9 realisierte Evoloid-Verzahnung ausgebildet. Die Evoloid-Verzahnung bzw. der Eingriff 17 kämmt vorliegend mit einer Schrägverzahnung der zweiten Welle 10 und stellt auf diese Weise ein Übersetzungsverhältnis von beispielsweise wenigstens 5 und insbesondere sogar von 10 zur Verfügung. Der zweite Eingriff 18 greift ebenfalls auf eine Evoloid-Verzahnung zurück, die sich abtriebsseitig der zweiten Welle 10 mit dem eingangs schräg verzahnten Zahnrad befindet. Die Evoloid-Verzahnung kämmt in diesem Zusammenhang mit einer Schrägverzahnung an der dritten Welle 11, wodurch erneut ein Übersetzungsverhältnis von mindestens 5 und vorzugsweise von 10 zur Verfügung gestellt wird oder realisiert werden kann.

Bei dem zweiten Eingriff 19 der Welle 11 handelt es sich im Ausführungsbeispiel um den zuvor bereits angesprochenen Nocken bzw. zwei Nocken, von denen einer an der dritten Welle 11 und ein anderer an einer weiteren zusätzlichen separaten Welle 21 einer Notentriegelung mit einer Kurbel 20 angeordnet sind. Die Notentriegelung bzw. Kurbel 20 ist dabei mit der separaten Welle 21 ausgerüstet. Die separate Welle 21 der Notentriegelung verläuft in seitlicher Überdeckung mit dem Elektromotor 8 und in angenäherter Verlängerung der zweiten Welle 10, wie man insbesondere anhand der Darstellung in der Fig. 3 erkennt.

Bei dem zweiten Eingriff 19 an der abtriebsseitigen bzw. dritten Welle 11 handelt es sich um den bereits angesprochenen Nocken, welcher mit einem Nocken an der separaten Welle 21 der Notentriegelung wechselwirkt oder wechselwirken kann. Dabei führen drehende Beaufschlagungen der Kurbel 20 dazu, dass die separate Welle 21 ebenfalls in Drehungen versetzt wird und diese Drehungen über den Eingriff 19 auf die dritte Welle 11 übertragen werden. Dadurch kann mit Hilfe der Notentriegelung bzw. der Kurbel 20 bei einem Ausfall des Elektromotors 8 das Riegelelement 6 alternativ entriegelt, nämlich notentriegelt, werden. Die Kurbel 20 ist so in dem Fahrzeug angeordnet, dass sie für eine Notentriegelung von einem Bediener ergriffen und betätigt werden kann, wobei die Anordnung an dem Fahrzeug so getroffen sein kann, dass zuvor ein Bauteil wie beispielsweise eine Klappe geöffnet werden muss, um Zugang zu der Kurbel 20 zu erlangen.

## Patentansprüche

1. Elektrische Anschlussvorrichtung für Elektro- oder Hybridkraftfahrzeuge, mit einer Ladesteckdose (3) und einem Ladestecker (4), einem verfahrbaren Riegelelement (6) zur lösbaren Verriegelung des Ladesteckers (4) in der Ladesteckdose (3), und mit einem Antrieb zum Verfahren des Riegelelements (6), der einen Elektromotor (8) und ein mehrstufiges Getriebe zur Beaufschlagung des Riegelelementes (6) aufweist, wobei das mehrstufige Getriebe einzelne Wellen (9, 10, 11) aufweist, die jeweils parallel zur Abtriebswelle (9) eines Elektromotors (8) des Antriebes angeordnet sind, wobei eine abtriebsseitige Welle (11) vorgesehen ist, die mit wenigstens zwei Eingriffen (18, 19) unterschiedlicher Verzahnung ausgerüstet ist, wobei ein erster Eingriff (18) der abtriebsseitigen Welle (11) zur Kopplung mit einer eingangsseitigen Welle (10) dient und wobei ein zweiter Eingriff (19) der abtriebsseitigen Welle (11) zur Kopplung mit einer Notentriegelung eingerichtet ist, **dadurch gekennzeichnet, dass** die Notentriegelung eine manuell betätigbare Kurbel (20) an einer separaten Welle (21) aufweist.

2. Anschlussvorrichtung nach Anspruch 1, **dadurch gekennzeichnet, dass** die Abtriebswelle (9) des Elektromotors (8) des Antriebes als erste Welle (9) und eine weitere zweite Welle (10) größtenteils in seitlicher Überdeckung zueinander angeordnet sind.

3. Anschlussvorrichtung nach Anspruch 1 oder 2, **dadurch gekennzeichnet, dass** eine dritte Welle (11) in seitlicher Überdeckung zur zweiten Welle (10) und dem Elektromotor (8) verläuft.

4. Anschlussvorrichtung nach einem der vorhergehenden Ansprüche, **dadurch gekennzeichnet, dass** die separate Welle (21) der Notentriegelung in seitlicher Überdeckung mit dem Elektromotor (8) und in angenäherter Verlängerung der zweiten Welle (10) verläuft.

5. Anschlussvorrichtung nach einem der Ansprüche 1 bis 4, **dadurch gekennzeichnet, dass** die abtriebsseitige Welle (11) einen Exzenter (11') aufweist, welcher mit dem Riegelelement (6) als drittem Eingriff wechselwirkt.

6. Anschlussvorrichtung nach Anspruch 4 oder 5, **dadurch gekennzeichnet, dass** die Eingriffe (18, 19) zwischen den einzelnen Wellen (9, 10, 11) als Stirnverzahnung und/oder Schrägverzahnung und/oder Evoloid-Verzahnung sowie Kombinationen ausgebildet sind.

## Claims

1. Electrical connection device for electric or hybrid motor vehicles, comprising a charging socket (3) and a charging plug (4), a movable locking element (6) for releasably locking the charging plug (4) in the charging socket (3), and comprising a drive for moving the locking element (6), which drive has an electric motor (8) and a multi-stage gear mechanism for acting on the locking element (6), the multi-stage gear mechanism having individual shafts (9, 10, 11) which are each arranged parallel to the output shaft (9) of an electric motor (8) of the drive, an output-side shaft (11) being provided which is equipped with at least two engagement means (18, 19) having different toothing, a first engagement means (18) of the output-side shaft (11) being used for coupling to an input-side shaft (10) and a second engagement means (19) of the output-side shaft (11) being set up for coupling to an emergency unlocking means, **characterized in that** the emergency unlocking means has a manually operable crank (20) on a separate shaft (21).

2. Connection device according to claim 1, **characterized in that** the output shaft (9) of the electric motor (8) of the drive as the first shaft (9) and an additional second shaft (10) are arranged so that they largely laterally overlap one another.

3. Connection device according to either claim 1 or claim 2, **characterized in that** a third shaft (11) extends so as to laterally overlap the second shaft (10) and the electric motor (8).

4. Connection device according to any of the preceding claims, **characterized in that** the separate shaft (21) of the emergency unlocking means extends so as to laterally overlap the electric motor (8) and in an approximate extension of the second shaft (10).

5. Connection device according to any of claims 1 to 4, **characterized in that** the output-side shaft (11) has an eccentric (11') which interacts with the locking element (6) as a third engagement means.

6. Connection device according to either claim 4 or claim 5, **characterized in that** the engagement means (18, 19) between the individual shafts (9, 10, 11) are designed as spur gearing and/or helical gearing and/or evoloid gearing and combinations.

## Revendications

1. Dispositif de connexion électrique pour véhicules automobiles électriques ou hybrides, comportant une prise de charge femelle (3) et une prise de charge mâle (4), un élément de verrouillage (6) mobile permettant de verrouiller de manière amovible la prise de charge mâle (4) dans la prise de charge femelle (3), et comportant un entraînement permettant de déplacer l'élément de verrouillage (6) qui présente un moteur électrique (8) et un engrenage à plusieurs étages permettant d'agir sur l'élément de verrouillage (6), l'engrenage à plusieurs étages présentant des arbres individuels (9, 10, 11) qui sont respectivement disposés parallèles à l'arbre de sortie (9) d'un moteur électrique (8) de l'entraînement, un arbre côté sortie (11) étant prévu, lequel étant équipé d'au moins deux engrènements (18, 19) de dentures différentes, un premier engrènement (18) de l'arbre côté sortie (11) étant utilisé pour l'accouplement à un arbre côté entrée (10) et un deuxième engrènement (19) de l'arbre côté sortie (11) étant conçu pour l'accouplement à un déverrouillage d'urgence, **caractérisé en ce que** le déverrouillage d'urgence présente une manivelle actionnable manuellement (20) sur un arbre séparé (21).

2. Dispositif de connexion selon la revendication 1, **caractérisé en ce que** l'arbre de sortie (9) du moteur électrique (8) de l'entraînement est disposé en tant que premier arbre (9) et un autre deuxième arbre (10) est disposé largement en recouvrement latéral l'un par rapport à l'autre.

3. Dispositif de connexion selon la revendication 1 ou 2, **caractérisé en ce qu'**un troisième arbre (11) s'étend en recouvrement latéral par rapport au deuxième arbre (10) et au moteur électrique (8).

4. Dispositif de connexion selon l'une des revendications précédentes, **caractérisé en ce que** l'arbre séparé (21) du déverrouillage d'urgence s'étend en recouvrement latéral avec le moteur électrique (8) et dans un prolongement approximatif du deuxième arbre (10).

5. Dispositif de connexion selon l'une des revendications 1 à 4, **caractérisé en ce que** l'arbre côté sortie (11) présente un excentrique (11') qui coopère avec l'élément de verrouillage (6) en tant que troisième engrènement.

6. Dispositif de connexion selon la revendication 4 ou 5, **caractérisé en ce que** les engrènements (18, 19) entre les arbres individuels (9, 10, 11) sont réalisés en tant que denture droite et/ou denture hélicoïdale et/ou denture à développante ainsi que leurs combinaisons.
